# FASCICULE DE BREVET EUROPEEN

(11) **EP 3 167 543 B1**
(45) Date de publication et mention de la délivrance du brevet: **29.06.2022**
(21) Numéro de dépôt: 15734709.7
(22) Date de dépôt: 13.07.2015
(51) Int. Cl.: H02P 6/14, H02P 6/15

(54) **PROCÉDÉ DE GÉNÉRATION DE SIGNAUX DE COMMANDE POUR GÉRER LE FONCTIONNEMENT D'UN MOTEUR SYNCHRONE, DISPOSITIF DE CONTRÔLE ET ACTIONNEUR**
VERFAHREN ZUR ERZEUGUNG VON STEUERSIGNALEN ZUR VERWALTUNG DES BETRIEBS EINES SYNCHRONMOTORS, STEUERUNGSVORRICHTUNG UND AKTUATOR
METHOD FOR GENERATING CONTROL SIGNALS FOR MANAGING THE OPERATION OF A SYNCHRONOUS MOTOR, CONTROL DEVICE AND ACTUATOR

(30) Priorité: 11.07.2014 FR 1456758
(43) Date de publication de la demande: 17.05.2017
(73) Titulaire: SOMFY ACTIVITES SA, 74300 Cluses (FR)
(72) Inventeur: MUGNIER, David, F-74130 Mont-Saxonnex (FR); GERMAIN, Florian, F-74330 Lovagny (FR)
(74) Mandataire: Bugnion Genève
(86) Numéro de dépôt international: PCT/EP2015/065926
(87) Numéro de publication internationale: WO 2016/005603

(56) Documents cités:
- DE-A1- 4 215 812
- DE-A1- 10 033 561
- US-A- 6 163 117
- NOR ZAIHAR YAHAYA ET AL: "Study of Phase Advance Angle Control (PAAC) Technique for Brushless DC (BLDC) Motor", 2ND 2013 IEEE CONFERENCE ON CONTROL, SYSTEMS AND INDUSTRIAL INFORMATICS, 26 juin 2013 (2013-06-26), XP055187589,
- BABICO J: "3-PHASE BRUSHLESS DC MOTOR USING A SINGLE SENSOR", MOTOROLA TECHNICAL DEVELOPMENTS, MOTOROLA INC. SCHAUMBURG, ILLINOIS, US, vol. 9, 1 août 1989 (1989-08-01), page 56/57, XP000053786, ISSN: 0887-5286

## Description

### DOMAINE TECHNIQUE DE L'INVENTION

L'invention se rapporte au domaine des actionneurs équipés de moteurs synchrones à aimants permanents. L'invention porte en particulier sur un procédé de génération de signaux de commande pour gérer le fonctionnement d'un moteur synchrone à un ou plusieurs aimants permanents équipant un tel actionneur. L'invention porte également sur un dispositif de contrôle adapté pour mettre en œuvre un tel procédé et sur un actionneur comprenant un moteur synchrone à un ou plusieurs aimants permanents et un dispositif de contrôle.

### ÉTAT DE LA TECHNIQUE ANTÉRIEURE

Un moteur synchrone à aimants permanents comporte généralement un stator polyphasé, composé d'une ou plusieurs bobines par phase et d'un empilement de tôles constituant un circuit magnétique, et un rotor à un ou plusieurs aimants permanents. En outre, afin de déterminer la position angulaire du rotor par rapport aux bobines, des capteurs sont généralement positionnés sur le stator pour détecter les variations du champ tournant induit par le rotor. En pratique, ces capteurs sont souvent décalés angulairement par rapport aux bobines, pour des raisons d'encombrement. Ces capteurs délivrent en particulier des éléments d'information requis pour être en mesure de générer des signaux de commande gouvernant le fonctionnement du moteur, mais également pour déterminer la position du rotor (nombres de tours effectués, position de fin de course, position intermédiaire, détection de position bloquée).

Afin de générer les signaux de commande du moteur, il est d'usage de positionner au sein du stator du moteur un nombre de capteurs strictement égal au nombre de phases du stator. Par exemple, dans le cas d'un stator triphasé, trois capteurs à effet Hall sont dans la plupart des cas agencés au sein du stator. L'utilisation d'un nombre de capteurs strictement égal au nombre de phases du moteur est toutefois contraignante en termes d'encombrement et de coût.

Dans une optique de réduction du nombre de capteurs utilisés pour la gestion du fonctionnement d'un moteur synchrone à aimants permanents, le document US 6 163 117 ou "BABICO J: "3-PHASE BRUSHLESS DC MOTOR USING A SINGLE SENSOR",MOTOROLA TECHNICAL DEVELOPMENTS" décrivent un procédé de génération de signaux de commande qui permet de diminuer le nombre de capteurs. Le principe divulgué revient à substituer à l'un des capteurs réels un capteur virtuel, c'est-à-dire à générer par le calcul un signal de sortie d'un capteur fictif, en fonction de signaux fournis par les capteurs réels en nombre inférieur au nombre de phases. Il apparaît toutefois que le procédé de commande divulgué ne permet pas de générer des signaux de commande pour que le fonctionnement du moteur soit optimisé. Le procédé n'offre en particulier aucune flexibilité pour tenir compte des différents régimes possibles de fonctionnement du moteur et optimiser le fonctionnement du moteur dans chacun de ces régimes de fonctionnement.

### EXPOSÉ DE L'INVENTION

L'invention vise à remédier aux inconvénients de l'état de la technique. Pour ce faire est proposé, suivant un premier aspect de l'invention, un procédé de génération tel que défini dans la revendication 1.

En tenant compte du stade de fonctionnement du moteur pour générer les signaux de commande, on optimise le fonctionnement de celui-ci, par exemple en termes de couple disponible ou encore en termes de performances thermiques ou de rendement, y compris lorsque le nombre de capteurs réels est inférieur au nombre de phases du moteur.

Préférentiellement le stade de fonctionnement appartient à un ensemble de stades possibles, comportant au moins deux stades parmi les stades suivants: un stade de repos, un stade de démarrage, un stade de régime nominal, un stade d'arrêt progressif et un stade d'arrêt d'urgence.

Suivant un mode de réalisation particulièrement avantageux, le stade de fonctionnement du moteur est déterminé en fonction des informations d'état transmises par les capteurs à effet Hall. Les informations d'état transmises par les capteurs à effet Hall permettent notamment d'estimer dès les premières fractions de tour le sens, la vitesse et l'accélération du moteur.

Suivant un mode de réalisation particulièrement simple, les stades possibles incluent
- un premier stade durant lequel les signaux de commande sont générés avec un premier décalage temporel prédéterminé, nul ou non nul, par rapport à des instants marqués par un changement d'état de l'un des capteurs à effet Hall ou du capteur virtuel, et
- un deuxième stade durant lequel les signaux de commande sont générés avec un deuxième décalage temporel prédéterminé distinct du premier décalage temporel prédéterminé, par rapport à des instants marqués par un changement d'état de l'un des capteurs à effet Hall ou du capteur virtuel.

Ce mode de réalisation peut notamment être mise en œuvre avec des capteurs à effet Hall à sortie binaire. Le premier stade peut par exemple être un stade de démarrage, et le deuxième stade un stade de régime nominal.

En pratique, les signaux de commande sont générés durant le premier stade de manière à ce qu'un courant électrique circulant entre des bornes d'un enroulement d'une phase du stator ait un premier déphasage électrique prédéterminé, nul ou non nul, par rapport à une force contre-électromotrice induite aux bornes de l'enroulement par le champ électromagnétique tournant,

Durant le deuxième stade les signaux de commande sont générés de manière à ce que le courant électrique circulant entre les bornes de l'enroulement de la phase du stator ait un deuxième déphasage électrique prédéterminé, différent du premier déphasage électrique prédéterminé, par rapport à la force contre-électromotrice induite aux bornes de l'enroulement par le champ électromagnétique tournant.

Suivant l'invention, les stades possibles incluent le stade de régime nominal, durant lequel l'étape d'estimation d'au moins une information complémentaire comprend :
- une étape de mesure des intervalles de temps entre deux changements d'état successifs d'un des capteurs à effet Hall ;
- une étape de calcul de la durée moyenne de ces intervalles ; et
- une étape consistant à utiliser la durée moyenne calculée pour estimer l'au moins une information complémentaire.

Durant le stade de régime nominal, les signaux de commande sont de préférence générés de manière à ce qu'un courant électrique circulant entre des bornes d'un enroulement d'une phase du stator ait un déphasage électrique prédéterminé nul ou strictement inférieur à 15° par rapport à une force contre-électromotrice induite par le champ électromagnétique tournant aux bornes de l'enroulement. En régime nominal, cette stratégie de commande permet d'optimiser le couple et le rendement, et de minimiser les pertes thermiques.

Les stades possibles incluent le stade de démarrage et l'étape d'estimation d'au moins une information complémentaire comprend, durant le stade de démarrage :
- une étape de mesure d'une durée d'un intervalle de temps entre un changement d'état d'un premier des capteurs à effet Hall et un premier changement d'état opposé d'un second des capteurs à effet Hall qui suit le changement d'état du premier des capteurs à effet Hall ou d'une durée d'un intervalle de temps entre un changement d'état du second des capteurs à effet Hall et un premier changement d'état opposé du premier des capteurs à effet Hall qui suit le changement d'état du second des capteurs à effet Hall ; puis
- une étape consistant à utiliser la durée mesurée pour estimer l'au moins une information complémentaire.

Cette caractéristique permet une plus grande réactivité lors d'accélérations ou décélérations du moteur.

En pratique, les signaux de commande sont générés, durant le stade de démarrage, de manière à ce qu'un courant électrique circulant entre des bornes d'un enroulement d'une phase du stator ait un déphasage électrique prédéterminé d'au moins 15° et de préférence d'au moins 30° par rapport à une force contre-électromotrice induite aux bornes de l'enroulement par le champ électromagnétique tournant. Ce mode de fonctionnement permet d'obtenir un flux important dans le circuit magnétique du stator du moteur, ce qui permet de garantir un bon démarrage.

Suivant une autre variante de l'invention, l'étape d'estimation d'au moins une information complémentaire comprend :
- une étape consistant à effectuer une analyse des informations d'état comprenant au moins un test pour déterminer si les informations d'état transmises par les capteurs remplissent une condition prédéterminée de suffisance ; puis
- si la condition de suffisance est remplie, une étape consistant à dériver l'au moins une information complémentaire directement de l'analyse;
- ou, si la condition de suffisance n'est pas remplie, une étape consistant à choisir l'au moins une information complémentaire de manière arbitraire puis à décider, sur la base d'informations d'état reçues ultérieurement pendant un intervalle de temps d'une durée prédéfinie, si l'au moins une information complémentaire doit être modifiée.

Alternativement, l'étape d'estimation d'au moins une information complémentaire comprend :
- une étape consistant à effectuer une analyse des informations d'état comprenant au moins un test pour déterminer si les informations d'état transmises par les capteurs remplissent une condition prédéterminée de suffisance ; puis
- si la condition de suffisance est remplie, une étape consistant à dériver l'au moins une information complémentaire directement de l'analyse;
- ou, si la condition de suffisance n'est pas remplie, une étape consistant à déterminer l'au moins une information complémentaire en fonction de l'analyse et d'un sens de rotation du moteur.

Selon un mode de réalisation préféré, P=3 et N=2. Le procédé de génération de signaux de commande selon l'invention s'applique donc avantageusement au moteur comprenant un stator triphasé.

Suivant un autre aspect de l'invention, celle-ci a trait à un dispositif de contrôle tel que défini dans la revendication 8.

Celle-ci porte sur un actionneur comprenant un moteur synchrone à aimants permanents comprenant un stator, le stator comprenant une pluralité d'enroulements constituant un nombre P de phases, P étant strictement supérieur à 2, un rotor, le rotor comprenant un nombre A d'aimants permanents, A étant supérieur ou égal à 1, un module de commutation muni d'une pluralité de commutateurs, un nombre N de capteurs à effet Hall, les capteurs a effet Hall étant sensibles à un champ électromagnétique tournant induit par les aimants permanents, N étant strictement supérieur à 1 et strictement inférieur à P, l'actionneur comprenant un dispositif de contrôle tel que défini précédemment, relié aux capteurs à effet Hall et au module de commutation 6.

Avantageusement, les capteurs à effet Hall sont agencés sur un élément support de circuit électronique commun positionné au sein du stator, l'élément support commun présentant de préférence une forme de disque, de segment de disque, d'anneau ou de segment d'anneau. Une telle configuration est particulièrement adaptée pour un moteur tubulaire largement utilisé par exemple dans le domaine domotique.

Afin de fournir un certain degré de flexibilité pour le choix du positionnement des capteurs au sein du moteur, on peut prévoir que l'élément support commun comprenne une pluralité de logements, et de préférence un nombre P de logements, chacun des logements étant adapté pour recevoir un capteur à effet Hall . De préférence, l'élément support commun comprend trois logements et deux capteurs à effet Hall. Suivant un mode de réalisation, les logements sont disposés à des intervalles angulaires de 60° ou 120° autour d'un axe de rotation du rotor.

Les capteurs à effet Hall sont des capteurs à effet Hall à sortie binaire. Alternativement, les capteurs à effet Hall sont des capteurs à effet Hall à sortie analogique, reliés à un étage de post-traitement délivrant des signaux binaires.

Suivant un mode de réalisation préféré, le nombre A est égal à deux ou quatre.

Suivant un autre aspect de l'invention, celle-ci a trait à un procédé de génération de signaux de commande pour gérer le fonctionnement d'un moteur synchrone à un ou plusieurs aimants permanents comprenant un stator, le stator comprenant un nombre P de phases, un rotor, le rotor comprenant le ou lesdits aimants permanents, un module de commutation muni d'une pluralité de commutateurs, un nombre N de capteurs à effet Hall sensibles à un champ électromagnétique tournant induit par le ou lesdits aimants permanents, N étant supérieur ou égal à 2 et strictement inférieur à P, le procédé comprenant :
- une étape d'acquisition d'informations d'état transmises par les capteurs ; et
- une étape consistant à déterminer un stade de fonctionnement du moteur ; et
- une étape consistant à générer des signaux de commande pour agir sur les commutateurs du module de commutation en fonction des informations d'état, du stade de fonctionnement du moteur, et d'au moins une information complémentaire caractérisant l'évolution de l'état d'au moins un capteur virtuel, et obtenue sur la base des informations d'état transmises par les capteurs au cours d'une étape d'estimation comportant:
   - une étape consistant à effectuer une analyse des informations d'état comprenant au moins un test pour déterminer si les informations d'état transmises par les capteurs remplissent une condition prédéterminée de suffisance ; puis
   - si la condition de suffisance est remplie, une étape consistant à dériver l'au moins une information complémentaire directement de l'analyse
   - ou si la condition de suffisance n'est pas remplie, une étape consistant à choisir l'au moins une information complémentaire de manière arbitraire puis à décider, sur la base d'informations d'état reçues ultérieurement pendant un intervalle de temps d'une durée prédéfinie, si l'au moins une information complémentaire doit être modifiée.

Il est naturellement possible de combiner entre eux différents aspects ou modes de réalisation de l'invention, pour en définir d'autres.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue schématique d'un actionneur selon l'invention ;
- la figure 2, une vue schématique d'un élément support de circuit commun du moteur synchrone à aimants permanents d'un actionneur selon l'invention ;
- la figure 3, une vue schématique des signaux d'état de capteurs à effet Hall d'un moteur synchrone à stator triphasé de l'état de la technique ;
- la figure 4, une première vue schématique de signaux d'état des capteurs lors de la mise en œuvre du processus de génération de signaux de commande selon l'invention ;
- la figure 5, une deuxième vue schématique de signaux d'état des capteurs lors de la mise en œuvre du processus de génération de signaux de commande selon l'invention ;
- la figure 6A, une troisième vue schématique de signaux d'état des capteurs lors de la mise en œuvre du processus de génération de signaux de commande selon l'invention ;
- la figure 6B, une quatrième vue schématique de signaux d'état des capteurs lors de la mise en œuvre du processus de génération de signaux de commande selon l'invention ;
- la figure 7, une cinquième vue schématique de signaux d'état des capteurs lors de la mise en œuvre du processus de génération de signaux de commande selon l'invention ;
- la figure 8, une vue schématique des signaux de fonctionnement d'un moteur synchrone à stator triphasé, en phase de démarrage et d'accélération ;
- la figure 9, une vue schématique des signaux de fonctionnement d'un moteur synchrone à stator triphasé, en régime nominal à vitesse de rotation constante.

Pour plus de clarté, les éléments identiques seront repérés par des signes de référence identiques sur l'ensemble des figures.

### DESCRIPTION DÉTAILLÉE DE MODES DE RÉALISATION

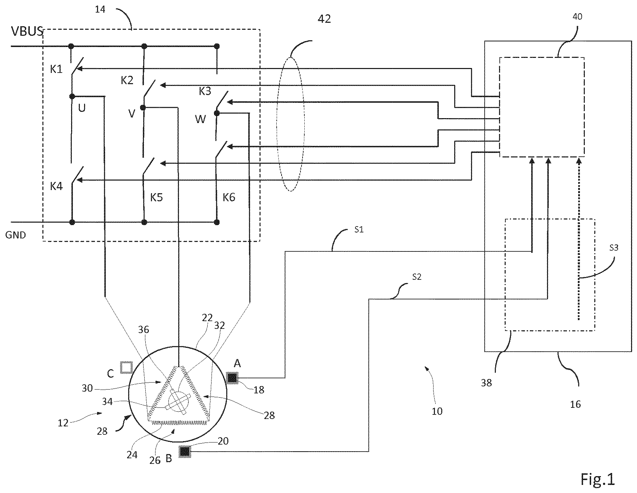

Sur la figure 1 est illustré schématiquement un actionneur **10** selon l'invention. L'actionneur **10,** qui est destiné à l'entraînement d'un équipement domotique, par exemple un écran de protection ou d'obturation, comprend un moteur synchrone **12** à aimants permanents, un module de commutation **14** du moteur et un dispositif de contrôle **16** qui est relié à des capteurs **18, 20** et au module de commutation **14.**

Le moteur **12** est constitué d'un stator **22** comprenant un empilage de tôles (non représentées) formant un circuit magnétique, et des enroulements **24** formant trois phases **26, 28, 30** disposées à 120° les unes des autres, et d'un rotor **32** à deux aimants permanents **34, 36** .

De manière connue, le module de commutation **14** comporte une pluralité de commutateurs de puissance **(K1-K6),** qui, en fonction de signaux de commande reçus, alimentent séquentiellement les phases **26, 28, 30** du moteur de manière à créer un champ magnétique tournant. Les séquences de commande sont générées en fonction de la position relative du rotor **32** par rapport aux enroulements **24** du stator **22.** Ainsi, le positionnement des commutateurs **(K1-K6)** à un instant donné constitue une commande qui, par l'intermédiaire des phases **26, 28, 30** du moteur **12,** détermine son fonctionnement.

Le module de commutation **14** est commandé par le dispositif de contrôle **16,** qui comprend un module **38** d'estimation du signal de sortie d'un capteur virtuel et un module **40** de génération de signaux de commande **42.** Chacun de ces modules comprend des moyens matériels et logiciels agencés et configurés pour que le dispositif de contrôle **16** mette en œuvre le procédé de génération de signaux de commande pour gérer le fonctionnement du moteur tel qu'il sera décrit ci-dessous.

Le module **38** d'estimation du signal de sortie d'un capteur virtuel est relié aux deux capteurs **18, 20** à effet Hall positionnés de manière fixe par rapport au stator **22,** de préférence intégrés à celui-ci. De préférence, ces capteurs **18, 20** sont des capteurs à effet Hall à sortie binaire. De préférence, ces capteurs sont positionnés à 120° ou 60° l'un de l'autre à l'intérieur du stator **22.**

Comme il sera décrit plus loin, le module d'estimation permet d'estimer, à partir de signaux d'état **S1, S2** des deux capteurs réels **18** et **20,** un signal **S3** tel qu'il serait délivré par un troisième capteur décalé angulairement par rapport aux capteurs réels **18** et **20.** Ce signal généré par le module d'estimation **11** caractérise ainsi l'évolution de l'état d'un capteur fictif qui, par opposition aux capteurs réels **18, 20,** est qualifié dans la présente demande de capteur virtuel.

Ainsi, alors que trois capteurs sont normalement nécessaires pour une détermination complète des signaux de commande **42** et de la position du rotor **32** pour un moteur muni d'un stator triphasé, le moteur **12** de actionneur **10** selon l'invention comprend seulement deux capteurs dits réels **18, 20.** Le procédé qui sera décrit en détail ci-dessous permet donc de générer des signaux de commande **42** pour agir sur les commutateurs **K1** à **K6** du module de commutation **14** du moteur en partant des signaux **S1, S2** fournis par seulement deux capteurs réels **18** et **20,** et en passant par une étape intermédiaire de construction d'un signal **S3** d'un capteur virtuel, à partir des signaux **S1** et **S2.**

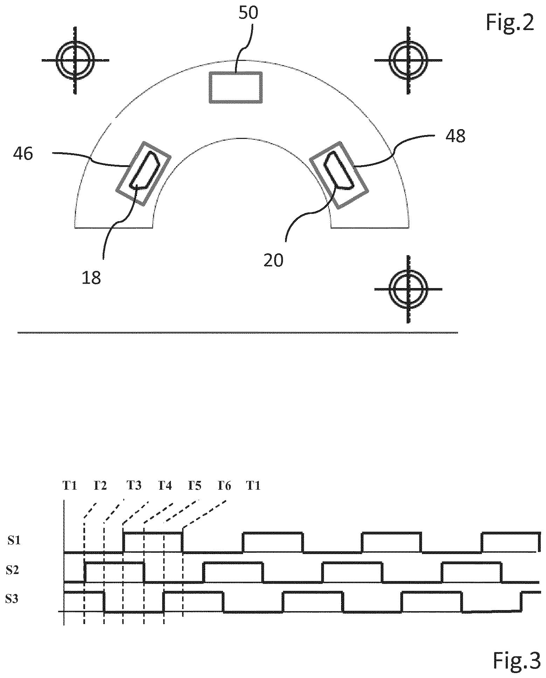

La figure 2 illustre schématiquement un élément support commun **44** agencé au sein du stator **22** du moteur **12** et sur lequel sont positionnés les capteurs **18, 20.** L'élément support commun **44** est sensiblement plan et présente de préférence une forme de segment d'anneau telle que présentée sur la figure 2. Cette forme est particulièrement avantageuse en termes d'encombrement, notamment pour un moteur tubulaire. Alternativement, l'élément support commun **44** peut prendre une forme d'anneau, de disque, ou de segment de disque. L'élément de support commun **44** comprend trois logements **46, 48, 50,** tous adaptés pour recevoir un capteur. Le premier capteur **18** est agencé dans un premier logement **46,** le deuxième capteur **20** est agencé dans un deuxième logement **48** alors qu'un troisième logement **50** est mis à profit en phase de conception pour loger un troisième capteur réel, et valider le procédé de génération de signaux de commande, et en phase de fonctionnement pour loger la connectique des deux capteurs 18, 20.

Pour une meilleure compréhension de la description du procédé selon l'invention, la figure 3 illustre les signaux délivrés par trois capteurs disposés dans un moteur synchrone à aimants permanents à stator triphasé conventionnel. Ces signaux binaires sont déphasés les uns par rapport aux autres. La table de vérité correspondante est établie ci-après:

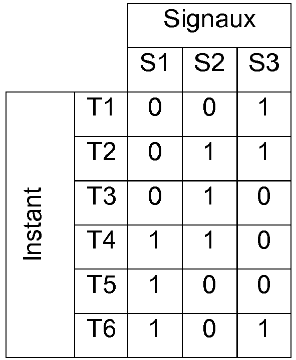

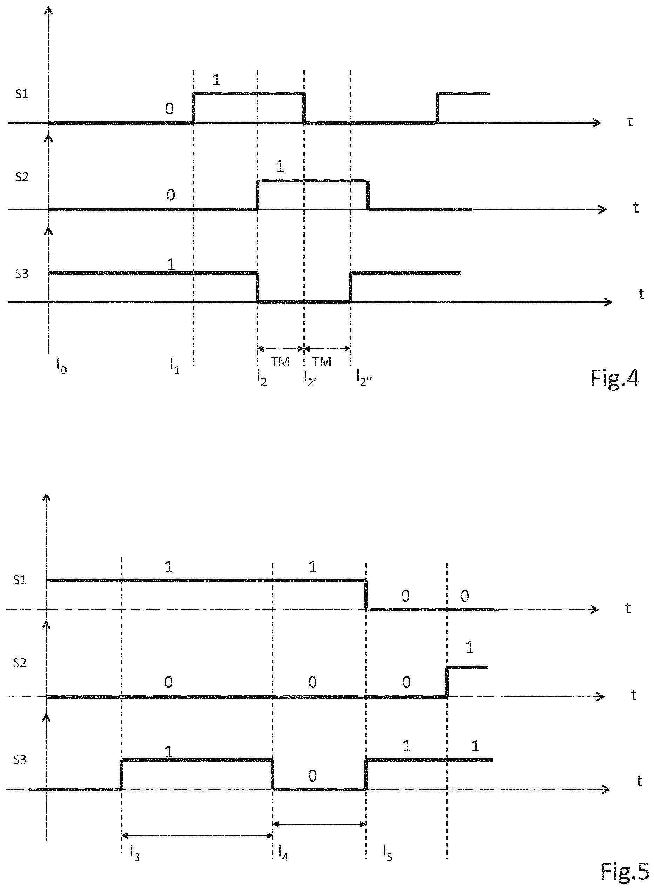

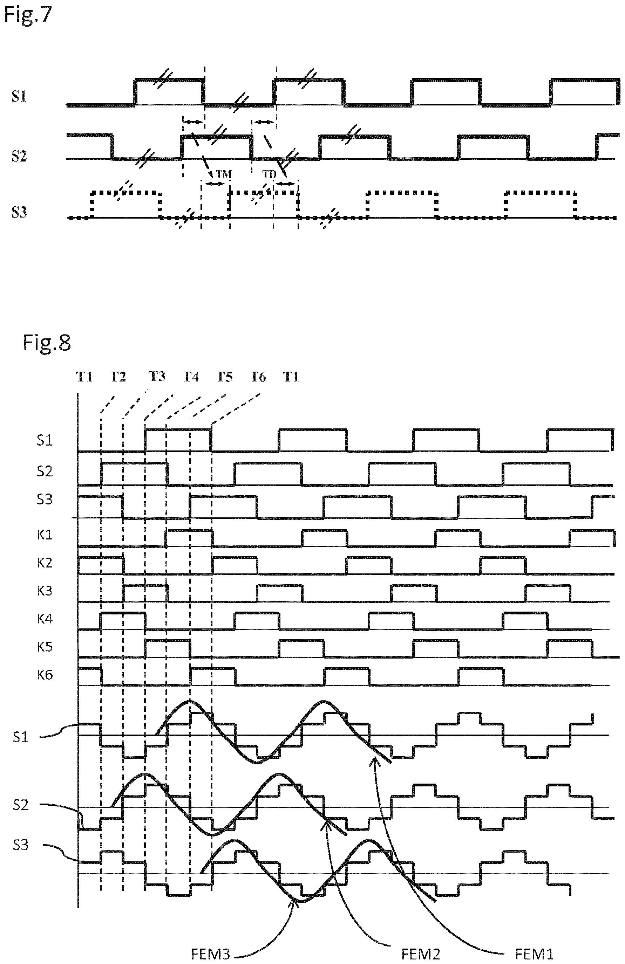

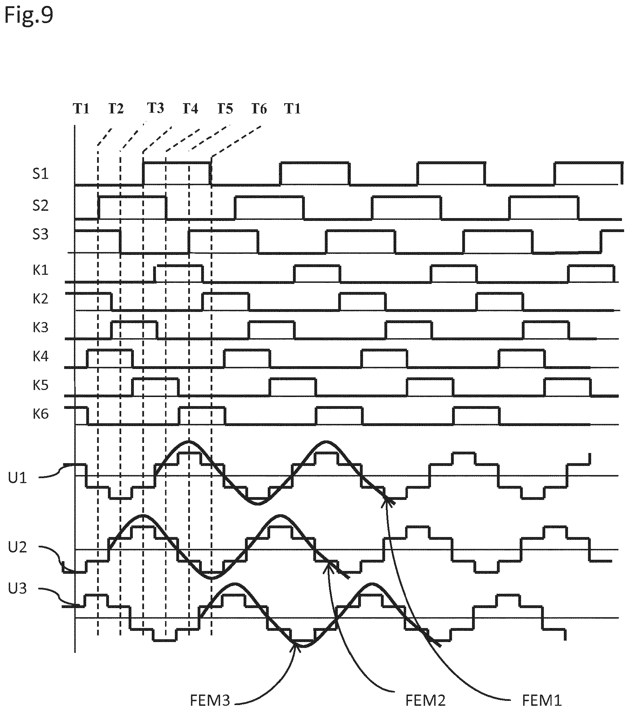

Pour s'affranchir de l'un des capteurs, le procédé selon la présente invention inclut un algorithme d'estimation, illustré par les figures 4 à 7 et exécuté par le module d'estimation **38,** qui permet d'estimer le signal **S3** caractérisant l'évolution de l'état d'un capteur virtuel en fonction des signaux d'état **S1** et **S2** transmis par les capteurs réels **18** et **20.** Les signaux **S1, S2** des capteurs réels et le signal **S3** résultant de l'algorithme d'estimation alimentent ensuite un algorithme de génération des signaux de commande, exécuté par le module **40** et décrit en relation avec les figures 8 et 9, qui permet de déterminer les instants auxquels les signaux de commande sont envoyés au module de commutation **14.**

L'algorithme d'estimation du signal **S3** peut être divisé en trois phases successives, à savoir une phase d'initialisation mise en œuvre au démarrage, lorsque le moteur quitte un stade de repos, suivie d'une phase d'accélération durant laquelle la vitesse du moteur n'est pas constante, suivie enfin d'une phase à vitesse constante correspondant à un régime nominal. Le cas échéant l'estimation du signal **S3** dans une phase postérieure de décélération peut suivre le même algorithme que dans la phase à vitesse constante.

Durant la phase d'initialisation, l'objectif est de déterminer, avec très peu données disponibles, une valeur initiale du signal **S3** du capteur virtuel. Dans cette phase, on met à profit des constats faits sur la table de vérité précédente: à la lecture de cette table, on constate que lorsque les deux capteurs **18** et **20** se trouvent dans le même état (par exemple capteur **18** et capteur **20** dans le même état « **00** » ou « **11** ») alors le troisième capteur se trouve forcément dans l'état opposé. Cette première constatation permet de déterminer le signal **S3** d'état du troisième capteur, ici le capteur virtuel, lorsque les signaux d'état **S1, S2** des deux capteurs réels **18** et **20** sont identiques.

Un premier mode de réalisation de l'algorithme pour cette phase d'initialisation est illustré sur les figures 4 et 5 où sont représenté les évolutions en fonction du temps des signaux **S1** et **S2** des capteurs réels **18** et **20** et du signal **S3** reconstitué du capteur virtuel.

La figure 4 illustre un cas dans lequel l'état initial des signaux **S1** et **S2** ne laisse pas de choix quant à la valeur du signal **S3.** Les signaux **S1** et **S2** étant initialement à 0 à l'arrêt du moteur (instant **I0**), le signal **S3** a été positionné à 1 (seule valeur compatible suivant la table de vérité). Lors du démarrage du moteur, la rotation du rotor entraîne tout d'abord un changement d'état du signal **S1** à l'instant **I1**. Le nouvel état des signaux **S1** et **S2,** à savoir "1" et "0", étant compatible avec la valeur précédente de **S3** ("1"), celle-ci est conservée. Puis le signal **S2** change d'état à son tour à l'instant **I2**, et la valeur du signal **S3** précédente devient incompatible avec le nouvel état des signaux **S1** et **S2.** Le module d'estimation du signal de sortie d'un capteur virtuel **38** modifie alors la valeur **S3,** ce qui achève cette phase d'initialisation.

La figure 5 illustre une situation dans laquelle les valeurs initiales des signaux **S1** et **S2** ne permettent pas de déterminer de façon univoque le signal **S3** au même instant. L'état du capteur virtuel est tout d'abord déterminé de manière arbitraire parmi les états compatibles avec les états des capteurs réels **18** et **20** (par exemple à l'instant **I3** sur la figure 5), puis cet état arbitraire est ensuite maintenu pendant un intervalle de temps d'une durée prédéterminée. Si, durant cet intervalle de temps, les signaux d'état **S1** et **S2** transmis par les capteurs réels ne montrent aucune variation, l'état **S3** du capteur virtuel est modifié (ici à l'instant **I4** sur la figure 5). Ce processus est réalisé de manière bouclée pendant un certain temps. Avantageusement, on peut envisager de faire varier la durée de l'intervalle de temps en fonction d'un sens de démarrage souhaité, d'une température ou de conditions initiales. De manière similaire au premier mode de réalisation, la phase d'initialisation s'achève au premier changement d'état d'un des signaux **S1** et **S2** qui, suite à une incompatibilité avec le signal **S3** courant, entraîne une modification de l'état de ce dernier, ici à l'instant **I5** repéré sur la figure 5.

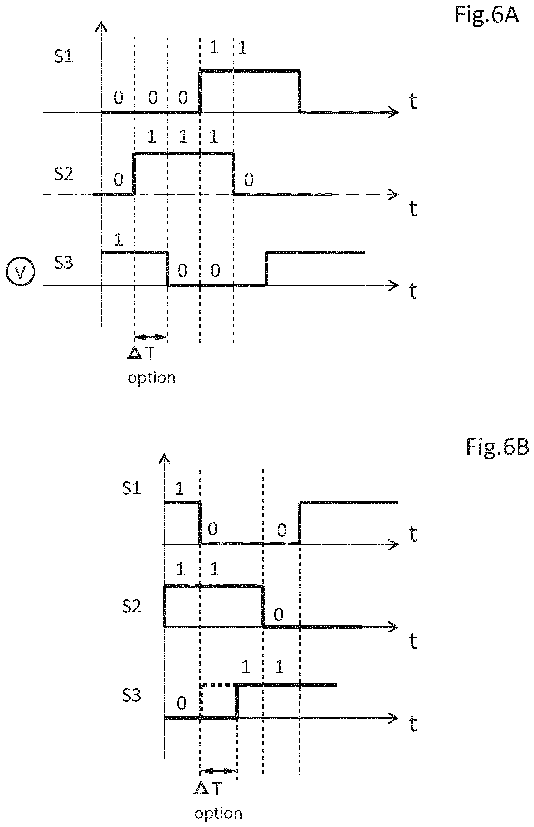

Suivant un deuxième mode de réalisation de l'algorithme mis en œuvre dans la phase d'initialisation, illustré sur les figures 6A et 6B, l'état du capteur virtuel est déterminé par le calcul en fonction des valeurs des capteurs réels et du sens de rotation prédéterminé connu. Il convient, pour la mise en œuvre de ce mode de réalisation, que le moteur ait préalablement enregistré des séquences des valeurs des signaux S1, S2 issus des capteurs réels correspondant aux sens de rotation. Ces séquences peuvent être prédéfinies ou apprises lors d'une étape d'installation. Dans le cas illustré sur la figure 6A, le moteur est alimenté de manière à tourner dans le sens **rétrograde.** En présence d'un signal **S1** prenant la valeur "0" et d'un signal **S2** prenant la valeur "0" à l'instant initial à l'arrêt, l'algorithme donne initialement la valeur "1" à **S3** (seule valeur compatible suivant la table de vérité) puis, après le premier changement d'état observé (ici la transition à la valeur "1" du signal **S2),** l'évolution du signal S3 est estimée par une valeur attribuée au signal S3 et un moment de transition, quand le signal prend effectivement la valeur attribuée. Cette valeur attribuée dépend du sens de rotation, et donc des prochaines séquences pour les valeurs des signaux S1, S2. Dans l'exemple illustré, la séquence (0,1) des signaux S1, S2, est suivie d'une séquence (1,1). La valeur attribuée à S3 est donc 0. L'algorithme génère une transition à la valeur "0" du signal **S3** simultanément avec la transition du signal S2 (non-représentée), ou après une temporisation **ΔT** (telle que illustrée par la figure 6A). La valeur attribuée à S3 lors d'un changement de séquence des signaux S1, S2 et l'éventuel retard **ΔT** de la transition du signal S3 par rapport à la transition de S2 résultent d'un apprentissage préalable. Sur la figure 6B est illustré un cas d'alimentation du moteur dans le sens direct. Initialement, les signaux S1 et S2 sont dans l'état "1", ce qui impose l'état "0" à S3. Il résulte de la première transition du signal S1 que la séquence des signaux S1, S2 devient (0,1). Contrairement à l'exemple illustré à la figure 1, la séquence suivante pour les signaux S1, S2 est (0,0) dans le sens de rotation considéré. La valeur attribuée à S3 est donc 1, et la transition est déclenchée soit simultanément avec la transition du signal S1, soit après une temporisation **ΔT.** Les séquences des valeurs des signaux S1, S2, issus des capteurs réels, ainsi que la durée de temporisation doivent avoir fait l'objet d'un apprentissage préalable pour chaque sens de rotation.

A la phase d'initialisation succède la phase d'accélération durant laquelle l'état du capteur virtuel est déterminé, pour un sens de rotation donné, en tenant compte également du temps écoulé depuis la dernière transition d'un signal issu d'un capteur réel, comme illustré sur les figures 4 et 7. Le module d'estimation **38** mesure dans un premier temps la durée **TM** entre un front montant (transition de l'état bas ou « 0 » à l'état haut ou « 1 ») d'un premier des capteurs A et B et un front descendant (transition de l'état haut ou « 1 » à l'état bas ou « 0 ») de l'autre des capteurs A et B pour générer au bout d'un temps égal à **TM** à compter du front descendant de l'autre capteur réel, un front montant du signal du capteur virtuel. Ainsi, à l'instant **I2'** sur la figure 4, une transition du signal **S1** est observée. La durée **TM** entre les instants **I2** et **I2'** est mémorisée comme valeur temporisation pour générer à un instant **I2",** postérieur à **I2'** d'un temps égal à **TM,** une nouveau changement d'état de **S3.** Une transition similaire est illustrée sur la figure 7. Puis, dans un deuxième temps, le module d'estimation **11** mesure la durée **TD** (figure 7) entre le front descendant suivant du premier des capteurs A et B et le front montant de l'autre des capteurs A et B pour générer au bout d'un temps égal à **TD** à compter du front montant de l'autre capteur réel, un front descendant du signal du capteur virtuel. La construction du signal virtuel par le module d'estimation **38** se poursuit ainsi de proche en proche. La phase d'accélération se poursuit tant que la vitesse de rotation varie de façon monotone, donc par exemple tant que l'intervalle de temps entre deux changements d'état successifs du signal **S1** diminue. L'avantage de cette méthode de détermination du signal caractérisant l'état du capteur virtuel est de permettre une grande réactivité lors des phases d'accélération.

A la phase d'accélération succède une phase de régime nominal, durant laquelle le signal caractérisant l'état du capteur virtuel est déterminé en tenant compte de la durée des intervalles de temps entre deux changements d'état successifs de l'un ou l'autre des capteurs réels. En particulier, en calculant la durée moyenne de ces intervalles, on peut prédire que, par analogie, les changements d'état du capteur virtuel doivent se succéder selon des intervalles de temps d'une durée sensiblement identique à la durée moyenne.

Comme il ressort des éléments ci-dessus, l'algorithme de génération du signal **S3** permet de reconstruire le signal caractérisant l'état d'un capteur virtuel à partir des informations fournies par les capteurs réels.

Sur la base des signaux d'état des capteurs réels et du signal reconstitué du capteur virtuel, le deuxième algorithme, illustré sur les figures 8 et 9, a pour but de déterminer les instants auxquels sont envoyés les signaux de commande, et plus généralement de permettre l'établissement des signaux de commande pour agir sur les commutateurs du module de commutation 14. Ces instants sont en particulier déterminés en tenant compte du stade de fonctionnement du moteur (repos, démarrage, accélération, régime nominal, décélération, arrêt d'urgence...). Les passages aux stades de démarrage, d'arrêt progressif ou d'arrêt d'urgence se font sur ordre de l'utilisateur ou détection d'anomalie. Par contre, le passage du stade de démarrage au stade de régime nominal se fait sur des critères d'évolution de la position du rotor.

La figure 8 illustre les signaux de fonctionnement du moteur synchrone à aimants permanents à stator triphasé en phase d'accélération au moment du démarrage, et la figure 9 les signaux correspondants en régime nominal à vitesse constante, en fonction des signaux **S1** et **S2** des capteurs réels **18** et **20** et du signal **S3** calculé par le module d'estimation **38.** La partie supérieure de chacune des deux figures 8 et 9 illustre les signaux d'état **S1, S2, S3.** Les six courbes suivantes illustrent l'évolution de l'état de chacun des commutateurs **(K1** à **K6)** induite par les signaux d'état des capteurs en fonction du temps. La partie inférieure de chaque figure illustre enfin la tension de phase U1, U2, U3 correspondante (fonctions en escalier) et la force électromotrice FEM1, FEM2, FEM3 induite aux bornes de chacune des phases (fonctions lissées). Il est à noter que le courant de phase est sensiblement en phase avec la tension de phase.

Aux stades du démarrage et de l'accélération, sur la figure 8, lorsque la vitesse de rotation augmente à partir de l'arrêt jusqu'à une valeur nominale, la commutation, c'est-à-dire l'envoi, par le module de génération **40** intégré au dispositif de contrôle **16,** de signaux de commande commandant le basculement des commutateurs **K1** à **K6** du module de commutation **14,** est synchronisée de manière à assurer un déphasage prédéterminé suffisant entre le courant électrique traversant un enroulement statorique (ou la tension de phase, courant et tension étant sensiblement en phase) et la force contre-électromotrice FEM1, FEM 2, FEM3, c'est-à-dire la tension induite aux bornes de ce même enroulement par les aimants en mouvement. Plus précisément, on constate dans l'exemple de la figure 8 que pour chaque phase, la tension aux bornes des enroulements de la phase (fonction périodique ou quasi-périodique en escalier) est déphasée par rapport à la force électromotrice induite par les aimants permanents (en l'occurrence avec un retard de phase d'environ 1/12^{ème} de la période temporelle de la tension).

L'objectif durant cette phase est de garantir le démarrage et de maximiser le couple, quitte à momentanément dégrader la vitesse, augmenter l'intensité du courant et la chaleur dissipée. En pratique, et en tenant compte du décalage angulaire physique existant entre les capteurs **18** et **20** fixes et les enroulements **24,** ce résultat est obtenu dans ce mode de réalisation en synchronisant le basculement des commutateurs sur les fronts de sortie des signaux des capteurs réels **18** et **20** et du capteur virtuel. En d'autres termes, les signaux de commande sont envoyés aux instants marqués par un changement d'état de l'un des capteurs réels ou du capteur virtuel. Mais ajoutons que ce parfait synchronisme n'est rencontré que si le positionnement angulaire des capteurs fixes **18** et **20** par rapport aux enroulements **24** a été judicieusement choisi. D'une manière plus générale, pour un positionnement angulaire quelconque, on constatera que le déphasage souhaité dans la phase de démarrage et d'accélération entre tension aux bornes des enroulements d'une phase et force électromagnétique induite par les aimants permanents dans ces mêmes enroulements correspond à un déphasage prédéterminé D1, nul ou non nul, entre les commutations des commutateurs **K1** à **K6** et les changements d'état des capteurs.

La table de vérité correspondante, dans un sens de rotation donné, est établie ci-après:

| Table de Vérité | | | | | | | | | |
|---|---|---|---|---|---|---|---|---|---|
| Instant | Signaux | | | Activation avec un déphasage D1 (nul) | | | | | |
| | S1 | S2 | S3 | K1 | K2 | K3 | K4 | K5 | K6 |

| | | | | | | | | | |
|---|---|---|---|---|---|---|---|---|---|
| T1 | 0 | 0 | 1 | 0 | 1 | 0 | 0 | 0 | 1 |
| T2 | 0 | 1 | 1 | 0 | 1 | 0 | 1 | 0 | 0 |
| T3 | 0 | 1 | 0 | 0 | 0 | 1 | 1 | 0 | 0 |
| T4 | 1 | 1 | 0 | 0 | 0 | 1 | 0 | 1 | 0 |
| T5 | 1 | 0 | 0 | 1 | 0 | 0 | 0 | 1 | 0 |
| T6 | 1 | 0 | 1 | 1 | 0 | 0 | 0 | 0 | 1 |

En régime nominal, sur la figure 9, lorsque la vitesse de rotation est constante et égale à la vitesse nominale, la synchronisation est effectuée de manière telle que la tension dans les enroulements **24** soit en phase avec la force contre-électromotrice, ce qui limite le flux dans le circuit magnétique, donc les échauffements et les pertes.

En pratique, dans l'exemple illustré sur la figure 9, ce mode de fonctionnement est obtenu par un déphasage D2 des commutations **K1** à **K6** par rapport aux signaux d'état **S1, S2** et **S3** des capteurs réels et virtuel, différent du déphasage D1 rencontré dans la phase de démarrage et d'accélération. Plus spécifiquement et à titre d'illustration, on lit sur la figure 8 un retard de phase d'un douzième de la période du signal de tension. La table d'activation correspondante est établie ci-après:

| Table d'activation | | | | | | | | | |
|---|---|---|---|---|---|---|---|---|---|
| Instant | Signaux | | | Activation avec un déphasage D2 | | | | | |
| | S1 | S2 | S3 | K1 | K2 | K3 | K4 | K5 | K6 |
| T1 | 0 | 0 | 1 | 0 | 1 | 0 | 1 | 0 | 0 |
| T2 | 0 | 1 | 1 | 0 | 0 | 1 | 1 | 0 | 0 |
| T3 | 0 | 1 | 0 | 0 | 0 | 1 | 0 | 1 | 0 |
| T4 | 1 | 1 | 0 | 1 | 0 | 0 | 0 | 1 | 0 |
| T5 | 1 | 0 | 0 | 1 | 0 | 0 | 0 | 0 | 1 |
| T6 | 1 | 0 | 1 | 0 | 1 | 0 | 0 | 0 | 1 |

En résumé, les signaux de commande sont générés avec un décalage temporel nul ou non nul par rapport aux instants marqués par un changement d'état de l'un des capteurs **18** ou **20** (signaux **S1** et **S2)** ou du capteur virtuel (signal **S3),** qui prend au moins une première valeur D1 en phase de démarrage et/ou d'accélération, et une deuxième valeur D2 en régime nominal, suivant que l'on vise à maximiser la réactivité du système (au démarrage) ou le rendement (en régime nominal).

En pratique, le décalage temporel appliqué pour l'envoi des signaux de commande est déterminé au stade du démarrage comme en régime nominal, en fonction du nombre d'aimants permanents **34, 36,** d'un angle délimité par la position d'un premier capteur **18** et la position d'un second capteur **20** adjacent au premier capteur et d'un angle délimité par la position du premier capteur **18** et la position de la phase **30,** c'est-à-dire l'enroulement, auquel il est associé.

Naturellement, diverses variations sont possibles. On peut notamment prévoir une variation continue du déphasage entre tension de phase et les commutations des capteurs lorsque la vitesse de rotation croît, de manière que le déphasage entre tension de phase et force contre-électromotrice induite décroisse continument lorsque la vitesse augmente. On peut également prévoir une variation par paliers. La vitesse de rotation peut être estimée simplement par le temps séparant deux changements d'état d'un même capteur **18** ou **20.** Cette évolution se traduit dans le deuxième processus par une variation continue du déphasage temporel entre les changements d'états des signaux **S1, S2** et **S3,** et les ordres de commutation **K1** à **K6.**

Bien que, pour des raisons de clarté, la description ci-dessus se soit limitée au cas d'un stator comprenant trois phases configurées en triangle et d'un rotor comprenant deux aimants, le procédé de génération de signaux de commande selon l'invention peut être mis en œuvre pour n'importe quel type de configuration stator-rotor, et notamment à une configuration en étoile. En d'autres termes, le procédé selon l'invention s'applique à tout type de stator polyphasé et quel que soit le nombre d'aimants permanents porté par le rotor.

## Revendications

1. Procédé de génération de signaux de commande pour gérer le fonctionnement d'un moteur synchrone à un ou plusieurs aimants permanents (12) comprenant un stator (22), le stator comprenant un nombre P de phases (26, 28, 30), un rotor (32), le rotor comprenant le ou lesdits aimants permanents (34, 36), un module de commutation (14) muni d'une pluralité de commutateurs (K1, ... K6), un nombre N de capteurs à effet Hall (18, 20) sensibles au champ électromagnétique tournant induit par le ou lesdits aimants permanents, N étant supérieur ou égal à 2 et strictement inférieur à P, le procédé comprenant :
- une étape d'acquisition d'informations d'état transmises par les capteurs (18, 20) ; et
- une étape d'estimation d'au moins une information complémentaire sur la base des informations d'état transmises par les capteurs (18, 20), l'au moins une information complémentaire caractérisant l'évolution de l'état d'au moins un capteur virtuel ;
le procédé comprenant :
- une étape consistant à déterminer un stade de fonctionnement du moteur (12) dans un ensemble de stades possibles, comportant une phase d'accélération et au moins deux stades parmi les stades suivants: un stade de repos, un stade de démarrage, un stade de régime nominal, et
- une étape consistant à générer des signaux de commande pour agir sur les commutateurs (K1,... K6) du module de commutation (6) en fonction des informations d'état, de l'au moins une information complémentaire et du stade de fonctionnement du moteur ; **caractérisé en ce que** le procédé comprend :
- pendant la phase d'accélération :
- 1) l'étape d'acquisition d'informations d'état transmises par les capteurs comprend, pour un sens de rotation donné, la mesure de la durée TM entre un front montant d'un premier desdits capteurs et un front descendant d'un deuxième desdits capteurs ;
- 2) l'étape d'estimation d'au moins une information complémentaire caractérisant l'évolution de l'état d'au moins un capteur virtuel comprenant la génération d'un front montant d'un capteur virtuel au bout du temps TM à compter du front descendant dudit deuxième desdits capteurs ;
- 3) l'étape d'acquisition d'informations d'état transmises par les capteurs comprend, pour le sens de rotation donné, la mesure de la durée TD entre un front descendant suivant du premier desdits capteurs et un front montant du deuxième desdits capteurs ;
- 4) l'étape d'estimation d'au moins une information complémentaire caractérisant l'évolution de l'état d'au moins un capteur virtuel, comprenant la génération d'un front descendant dudit capteur virtuel au bout du temps TD à compter du front montant dudit deuxième desdits capteurs.

2. Procédé de génération de signaux de commande selon la revendication 1, **caractérisé en ce que** le stade de fonctionnement du moteur est déterminé en fonction des informations d'état transmises par les capteurs à effet Hall.

3. Procédé de génération de signaux de commande selon l'une quelconque des revendications précédentes, **caractérisé en ce que** les stades possibles incluent
- un premier stade durant lequel les signaux de commande sont générés avec un premier décalage temporel prédéterminé, nul ou non nul, par rapport à des instants marqués par un changement d'état de l'un des capteurs à effet Hall (18, 20) ou du capteur virtuel,
- un deuxième stade durant lequel les signaux de commande sont générés avec un deuxième décalage temporel prédéterminé distinct du premier décalage temporel prédéterminé, par rapport à des instants marqués parun changement d'état de l'un des capteurs à effet Hall (18, 20) ou du capteur virtuel.

4. Procédé de génération de signaux de commande selon l'une quelconque des revendications précédentes, **caractérisé en ce que** les stades possibles incluent le stade de régime nominal, durant lequel l'étape d'estimation d'au moins une information complémentaire comprend :
- une étape de mesure des intervalles de temps entre deux changements d'état successifs d'un des capteurs à effet Hall (18, 20) ;
- une étape de calcul de la durée moyenne de ces intervalles ; et
- une étape consistant à utiliser la durée moyenne calculée pour estimer l'au moins une information complémentaire.

5. Procédé de commande selon l'une quelconque des revendications précédentes, **caractérisé en ce que** les stades possibles incluent le stade de démarrage et **en ce que** l'étape d'estimation d'au moins une information complémentaire comprend, durant le stage de démarrage :
- une étape de mesure d'une durée d'un intervalle de temps entre un changement d'état d'un premier des capteurs à effet Hall (18) et un premier changement d'état opposé d'un second des capteurs à effet Hall (20) qui suit le changement d'état du premier des capteurs à effet Hall (18) ou d'une durée d'un intervalle de temps entre un changement d'état du second des capteurs à effet Hall (20) et un premier changement d'état opposé du premier des capteurs à effet Hall (18) qui suit le changement d'état du second des capteurs à effet Hall (20) ; puis
- une étape consistant à utiliser la durée mesurée pour estimer l'au moins une information complémentaire.

6. Procédé de génération de signaux de commande selon l'une quelconque des revendications précédentes, **caractérisé en ce que** l'étape d'estimation d'au moins une information complémentaire comprend :
- une étape consistant à effectuer une analyse des informations d'état comprenant au moins un test pour déterminer si les informations d'état transmises par les capteurs remplissent une condition prédéterminée de suffisance ; puis
- si la condition de suffisance est remplie, une étape consistant à dériver l'au moins une information complémentaire directement de l'analyse
- ou si la condition de suffisance n'est pas remplie, une étape consistant à choisir l'au moins une information complémentaire de manière arbitraire puis à décider, sur la base d'informations d'état reçues ultérieurement pendant un intervalle de temps d'une durée prédéfinie, si l'au moins une information complémentaire doit être modifiée.

7. Procédé de génération de signaux de commande selon l'une quelconque des revendications 1 à 5, **caractérisé en ce que** l'étape d'estimation d'au moins une information complémentaire comprend :
- une étape consistant à effectuer une analyse des informations d'état comprenant au moins un test pour déterminer si les informations d'état transmises par les capteurs remplissent une condition prédéterminée de suffisance ; puis
- si la condition de suffisance est remplie, une étape consistant à dériver l'au moins une information complémentaire directement de l'analyse
- ou si la condition de suffisance n'est pas remplie, une étape consistant à déterminer l'au moins une information complémentaire en fonction de l'analyse et d'un sens de rotation du moteur.

8. Actionneur (10) comprenant un moteur synchrone à aimants permanents (12) comprenant un stator (22), le stator comprenant une pluralité d'enroulements (24) constituant un nombre P de phases (26, 28, 30), P étant strictement supérieur à 2, un rotor (32), le rotor (32) comprenant un nombre A d'aimants permanents (34, 36), A étant supérieur ou égal à 1 , un module de commutation (14) muni d'une pluralité de commutateurs (K1,...
K6), un nombre N de capteurs à effet Hall, les capteurs à effet Hall étant sensibles à un champ électromagnétique tournant induit par les aimants permanents, N étant strictement supérieur à 1 et strictement inférieur à P, un dispositif de contrôle (16) du moteur synchrone à aimants permanents (12), relié aux capteurs à effet Hall (18, 20) et au module de commutation (14), ledit dispositif de contrôle (16) comprenant un module d'estimation d'au moins une information complémentaire (38) et un module de génération de signaux de commande (40) **caractérisé en ce que** le dispositif de contrôle est configuré pour mettre en œuvre le procédé selon l'une des revendications précédentes.

9. Actionneur selon la revendication 8, **caractérisé en ce que** les capteurs à effet Hall (18, 20) sont agencés sur un élément support de circuit électronique commun (44) positionné au sein du stator, l'élément support commun (44) présentant de préférence une forme de disque, de segment de disque, d'anneau ou de segment d'anneau.

10. Actionneur selon la revendication 9, **caractérisé en ce que** l'élément support commun (44) comprend une pluralité de logements (46, 48, 50), et de préférence un nombre P de logements, chacun des logements étant adapté pour recevoir un capteur à effet Hall (18, 20).

11. Actionneur selon l'une quelconque des revendications 8 à 10, **caractérisé en ce que** les capteurs à effet Hall (18, 20) sont des capteurs à effet Hall à sortie binaire.

12. Actionneur selon l'une quelconque des revendications 8 à 10, **caractérisé en ce que** les capteurs à effet Hall (18, 20) sont des capteurs à effet Hall à sortie analogique, reliés à un étage de post-traitement délivrant des signaux binaires.

13. Actionneur selon l'une quelconque des revendications 8 à 12, **caractérisé en ce que** le nombre A est égal à deux ou quatre.

## Patentansprüche

1. Verfahren zur Erzeugung von Steuersignalen zur Verwaltung des Betriebs eines Synchronmotors mit einem oder mehreren Dauermagneten (12), umfassend einen Stator (22), wobei der Stator eine Anzahl P von Phasen (26, 28, 30) umfasst, einen Rotor (32), wobei der Rotor den oder die Dauermagnete (34, 36) umfasst, ein Umschaltmodul (14), das mit einer Vielzahl von Umschaltern (K1, ... K6) versehen ist, eine Anzahl N von Sensoren mit Hall-Effekt (18, 20), die gegenüber dem drehenden, von dem oder den Dauermagneten induzierten Magnetfeld sensibel sind, wobei N größer oder gleich 2 und strikt kleiner als P ist, wobei das Verfahren umfasst:
- einen Schritt des Erfassens von Zustandsinformationen, die von den Sensoren (18, 20) übertragen werden; und
- einen Schritt des Schätzens von mindestens einer komplementären Information auf der Basis der von den Sensoren (18, 20) übertragenen Zustandsinformationen, wobei die mindestens eine komplementäre Information die Entwicklung des Zustands von mindestens einem virtuellen Sensor kennzeichnet;
wobei das Verfahren umfasst:
- einen Schritt, der darin besteht, ein Betriebsstadium des Motors (12) aus einer Gruppe möglicher Stadien zu bestimmen, aufweisend eine Beschleunigungsphase und mindestens zwei Stadien der folgenden Stadien: ein Ruhestadium, ein Startstadium, ein nominales Betriebsstadium, und
- einen Schritt, der darin besteht, Steuersignale zu erzeugen, um auf die Umschalter (K1, ... K6) des Umschaltmoduls (6) in Abhängigkeit von den Zustandsinformationen, von der mindestens einen komplementären Information und vom Betriebsstadium des Motors einzuwirken; **dadurch gekennzeichnet, dass** das Verfahren umfasst:
- während der Beschleunigungsphase:
- 1) den Schritt des Erfassens von Zustandsinformationen, die von den Sensoren übertragen werden, der für eine bestimmte Rotationsrichtung die Messung der Dauer TM zwischen einer ansteigenden Flanke eines ersten der Sensoren und einer abfallenden Flanke eines zweiten der Sensoren umfasst;
- 2) wobei der Schritt des Schätzens mindestens einer komplementären Information, die die Entwicklung des Zustands mindestens eines virtuellen Sensors kennzeichnet, das Erzeugen einer ansteigenden Flanke eines virtuellen Sensors am Ende der Zeit TM ab der abfallenden Flanke des zweiten der Sensoren umfasst;
- 3) den Schritt des Erfassens von Zustandsinformationen, die von Sensoren übertragen werden, der für die gegebene Rotationsrichtung die Messung der Dauer TD zwischen einer abfallenden Flanke gemäß dem ersten der Sensoren und einer ansteigenden Flanke des zweiten der Sensoren umfasst;
- 4) wobei der Schritt des Schätzens mindestens einer komplementären Information, die die Entwicklung des Zustand mindestens eines virtuellen Sensors kennzeichnet, das Erzeugen einer abfallenden Flanke des virtuellen Sensors am Ende der Zeit TD ab der ansteigenden Flanke des zweiten der Sensoren umfasst.

2. Verfahren zur Erzeugung von Steuersignalen nach Anspruch 1, **dadurch gekennzeichnet, dass** das Betriebsstadium des Motors in Abhängigkeit von den Zustandsinformationen bestimmt wird, die von den Sensoren mit Hall-Effekt übertragen werden.

3. Verfahren zur Erzeugung von Steuersignalen nach einem der vorangehenden Ansprüche, **dadurch gekennzeichnet, dass** die möglichen Stadien einschließen
- ein erstes Stadium, bei dem die Steuersignale mit einem ersten vorher festgelegten Zeitversatz, null oder nicht null, im Verhältnis zu Zeitpunkten erzeugt werden, die durch eine Zustandsänderung von einem der Sensoren mit Hall-Effekt (18, 20) oder des virtuellen Sensors markiert sind,
- ein zweites Stadium, bei dem die Steuersignale mit einem zweiten vorher festgelegten Zeitversatz, der von dem ersten vorher festgelegten Zeitversatz unterschiedlich ist, im Verhältnis zu Zeitpunkten erzeugt werden, die durch eine Zustandsänderung von einem der Sensoren mit Hall-Effekt (18, 20) oder des virtuellen Sensors markiert sind.

4. Verfahren zur Erzeugung von Steuersignalen nach einem der vorangehenden Ansprüche, **dadurch gekennzeichnet, dass** die möglichen Stadien das nominale Betriebsstadium einschließen, bei dem der Schritt des Schätzens mindestens einer komplementären Information umfasst:
- einen Schritt des Messens der Zeitintervalle zwischen zwei aufeinanderfolgenden Zustandsänderungen eines der Sensoren mit Hall-Effekt (18, 20);
- einen Schritt des Berechnens der mittleren Dauer dieser Intervalle; und
- einen Schritt, der darin besteht, die berechnete mittlere Dauer zu verwenden, um die mindestens eine komplementäre Information zu schätzen.

5. Steuerverfahren nach einem der vorangehenden Ansprüche, **dadurch gekennzeichnet, dass** die möglichen Stadien das Startstadium einschließen und dass der Schritt des Schätzens mindestens einer komplementären Information während des Startstadiums umfasst:
- einen Schritt des Messens einer Dauer eines Zeitintervalls zwischen einer Zustandsänderung eines ersten der Sensoren mit Hall-Effekt (18) und einer ersten entgegengesetzten Zustandsänderung eines zweiten der Sensoren mit Hall-Effekt (20), die der Zustandsänderung des ersten der Sensoren mit Hall-Effekt (18) folgt, oder einer Dauer eines Zeitintervalls zwischen einer Zustandsänderung des zweiten der Sensoren mit Hall-Effekt (20) und einer ersten entgegengesetzten Zustandsänderung des ersten der Sensoren mit Hall-Effekt (18), die der Zustandsänderung des zweiten der Sensoren mit Hall-Effekt (20) folgt; dann
- einen Schritt, der darin besteht, die gemessene Dauer zu verwenden, um die mindestens eine komplementäre Information zu schätzen.

6. Verfahren zur Erzeugung von Steuersignalen nach einem der vorangehenden Ansprüche, **dadurch gekennzeichnet, dass** der Schritt des Schätzens mindestens einer komplementären Information umfasst:
- einen Schritt, der darin besteht, eine Analyse der Zustandsinformationen durchzuführen, umfassend mindestens einen Test, um zu bestimmen, ob die von den Sensoren übermittelten Zustandsinformationen eine vorher festgelegte Angemessenheitsbedingung erfüllen; dann
- wenn die Angemessenheitsbedingung erfüllt ist, einen Schritt, der darin besteht, die mindestens eine komplementäre Information direkt aus der Analyse abzuleiten
- oder, wenn die Angemessenheitsbedingung nicht erfüllt ist, einen Schritt, der darin besteht, die mindestens eine komplementäre Information zufällig auszuwählen und dann zu entscheiden, auf der Basis von zuvor während eines Zeitintervalls einer vorher festgelegten Dauer erhaltenen Zustandsinformationen, ob die mindestens eine komplementäre Information verändert werden muss.

7. Verfahren zur Erzeugung von Steuersignalen nach einem der Ansprüche 1 bis 5, **dadurch gekennzeichnet, dass** der Schritt des Schätzens mindestens einer komplementären Information umfasst:
- einen Schritt, der darin besteht, eine Analyse der Zustandsinformationen durchzuführen, umfassend mindestens einen Test, um zu bestimmen, ob die von den Sensoren übermittelten Zustandsinformationen eine vorher festgelegte Angemessenheitsbedingung erfüllen; dann
- wenn die Angemessenheitsbedingung erfüllt ist, einen Schritt, der darin besteht, die mindestens eine komplementäre Information direkt aus der Analyse abzuleiten
- oder, wenn die Angemessenheitsbedingung nicht erfüllt ist, einen Schritt, der darin besteht, die mindestens eine komplementäre Information in Abhängigkeit von der Analyse und von einer Rotationsrichtung des Motors abzuleiten.

8. Aktuator (10), umfassend einen Synchronmotor mit Dauermagneten (12), umfassend einen Stator (22), wobei der Stator eine Vielzahl von Wicklungen (24) umfasst, die eine Anzahl P von Phasen (26, 28, 30) bilden, wobei P strikt größer als 2 ist, einen Rotor (32), wobei der Rotor (32) eine Anzahl A von Dauermagneten (34, 36) umfasst, wobei A größer oder gleich 1 ist, ein Umschaltmodul (14), das mit einer Vielzahl von Umschaltern (K1, ... K6) versehen ist, eine Anzahl N von Sensoren mit Hall-Effekt, wobei die Sensoren mit Hall-Effekt gegenüber einem drehenden, von den Dauermagneten induzierten Magnetfeld sensibel sind, wobei N strikt größer als 1 und strikt kleiner als P ist, eine Steuervorrichtung (16) des Synchronmotors mit Dauermagneten (12), die mit den Sensoren mit Hall-Effekt (18, 20) und mit den Umschaltmodul (14) verbunden ist, wobei die Steuervorrichtung (16) ein Modul zum Schätzen mindestens einer komplementären Information (38) und ein Modul zum Erzeugen von Steuersignalen (40) umfasst, **dadurch gekennzeichnet, dass** die Steuervorrichtung ausgelegt ist, um das Verfahren nach einem der vorangehenden Ansprüche durchzuführen.

9. Aktuator nach Anspruch 8, **dadurch gekennzeichnet, dass** die Sensoren mit Hall-Effekt (18, 20) auf einem gemeinsamen Trägerelement eines elektronischen Schaltkreises (44) eingerichtet sind, der im Stator positioniert ist, wobei das gemeinsame Trägerelement (44) vorzugsweise eine Form einer Scheibe, eines Scheibensegments, eines Rings oder eines Ringsegments aufweist.

10. Aktuator nach Anspruch 9, **dadurch gekennzeichnet, dass** das gemeinsame Trägerelement (44) eine Vielzahl von Aufnahmen (46, 48, 50) und vorzugsweise eine Anzahl P von Aufnahmen umfasst, wobei jede der Aufnahmen zum Empfang eines Sensors mit Hall-Effekt (18, 20) geeignet ist.

11. Aktuator nach einem der Ansprüche 8 bis 10, **dadurch gekennzeichnet, dass** die Sensoren mit Hall-Effekt (18, 20) Sensoren mit Hall-Effekt mit binärem Ausgang sind.

12. Aktuator nach einem der Ansprüche 8 bis 10, **dadurch gekennzeichnet, dass** die Sensoren mit Hall-Effekt (18, 20) Sensoren mit Hall-Effekt mit analogem Ausgang sind, die mit einer Nachverarbeitungsstufe verbunden sind, die binäre Signale bereitstellt.

13. Aktuator nach einem der Ansprüche 8 bis 12, **dadurch gekennzeichnet, dass** die Anzahl A gleich zwei oder vier ist.

## Claims

1. A method for generating control signals for managing the operation of a synchronous motor with one or more permanent magnets (12) comprising a stator (22), the stator comprising a number P of phases (26, 28, 30), a rotor (32), the rotor comprising said permanent magnet(s) (34, 36), a switching module (14) provided with a plurality of switches (K1, ..., K6), a number N of Hall effect sensors (18, 20) sensitive to a rotating electromagnetic field induced by said permanent magnet(s), N being no lower than 2 and strictly lower than P, the method comprising:
- a step of acquiring status information transmitted by the sensors (18, 20); and
- a step of estimating at least one piece of complementary information on the basis of status information transmitted by the sensors (18, 20), the complementary information characterizing the status variation of at least one virtual sensor;
the method comprising:
- a step consisting of identifying an operating stage of the motor (12) in a set of possible stages, including an acceleration phase and at least two stages from among the following stages: an idle stage, a startup stage, a nominal rating stage; and
- a step consisting of generating control signals to act on the switches (K1, ..., K6) of the switching module (6) based on the status information, the at least one piece of complementary information and operating stage of the motor; **characterized in that** the method comprises :
- during the acceleration phase :
1) the step of acquiring status information transmitted by the sensors comprises, for a given rotation direction, the measurement of the duration TM between a rising edge of a first sensor among said sensors and a falling edge of a second sensors among said sensors,
2) the step of estimating at one complementary information characterizing the evolution the state of at least one virtual sensor comprising the generation of a rising edge of a virtual sensor at the end of the duration TM form the falling edge of said second sensor among said sensors;
3) the step of acquiring status information transmitted by the sensors comprises, for the given rotation direction, the measurement of the duration TM between a next falling edge of a first sensor among said sensors and a rising edge of a second sensors among said sensors,
4) the step of estimating at least one complementary information characterizing the evolution the status of at least one virtual sensor, comprising the generation of a falling edge of said virtual sensor at the end of the duration TD from the rising edge of said second sensor among said sensors.

2. The method for generating control signals according to claim 1, **characterized in that** the operating stage of the motor is determined based on status information transmitted by the Hall effect sensors.

3. The method for generating control signals according to any one of the preceding claims, **characterized in that** the possible stages include:
- a first stage during which the control signals are generated with a first predetermined time shift, zero or nonzero, relative to moments marked by a change in status of one of the Hall effect sensors (18, 20) or the virtual sensor,
- a second stage during which the control signals are generated with a second predetermined time shift different from the first predetermined time shift, relative to moments marked by a change in status of one of the Hall effect sensors (18, 20) or the virtual sensor.

4. The method for generating control signals according to any one of the preceding claims, **characterized in that** the possible stages include the nominal rating stage, during which the step of estimating at least one piece of complementary information comprises:
- a step of measuring time intervals between two successive status changes of one of the Hall effect sensors (18, 20);
- a step for computing the mean duration of these intervals; and
- a step consisting of using the computed mean duration to estimate at least one piece of complementary information.

5. The method for generating control signals according to any one of the preceding claims, **characterized in that** the possible stages include the startup stage and **in that** the step of estimating at least one piece of complementary information comprises, during the startup stage:
- a step of measuring a duration of a time interval between a status change of a first of the Hall effect sensors (18) and an opposite first status change of a second of the Hall effect sensors (20) that follows the status change of the first of the Hall effect sensors (18) or a duration of a time interval between a status change of the second of the Hall effect sensors (20) and an opposite first status change of the first of the Hall effect sensors (18) that follows the status change of the second of the Hall effect sensors (20); then
- a step consisting of using the measured duration to estimate at least one piece of complementary information.

6. The method for generating control signals according to any one of the preceding claims, **characterized in that** the step of estimating at least one piece of complementary information comprises:
- a step consisting of analyzing status information comprising at least one test to determine whether the status information transmitted by the sensors meets a predetermined sufficiency condition; then
- if the sufficiency condition is met, a step consisting of deriving the at least one piece of complementary information directly from the analysis;
- or, if the sufficiency condition is not met, a step consisting of choosing the at least one piece of complementary information arbitrarily, then deciding, based on status information received later during a time interval with a predefined duration, whether the at least one piece of complementary information must be modified.

7. The method for generating control signals according to any one of claims 1 to 5, **characterized in that** the step of estimating at least one piece of complementary information comprises:
- a step consisting of analyzing status information comprising at least one test to determine whether the status information transmitted by the sensors meets a predetermined sufficiency condition; then
- if the sufficiency condition is met, a step consisting of deriving the at least one piece of complementary information directly from the analysis;
- or, if the sufficiency condition is not met, a step consisting of determining the at least one piece of complementary information based on the analysis and a rotation direction of the motor.

8. An actuator (10) comprising a synchronous motor with permanent magnets (12) comprising a stator (22), the stator comprising a plurality of windings (24) making up a number P of phases (26, 28, 30), P being no lower than 2, a rotor (32), the rotor (32) comprising a number A of permanent magnets (34, 36), A being greater than or equal to 1, a switching module (14) provided with a plurality of switches (K1, ..., K6), a number N of Hall effect sensors, the Hall effect sensors being sensitive to a rotating electromagnetic field induced by the permanent magnets, N being no lower than 1 and strictly lower than P, a control device (16) of the synchronous motor with permanent magnets (12) connected to the Hall effect sensors (18, 20) and the switching module (14), said control device (16) comprising a module for estimating at least one piece of complementary information (38) and a module for generating control signals (40) **characterized in that** the control device is configured to carry out the method according to one of the preceding claims.

9. The actuator according to claim 8, **characterized in that** the Hall effect sensors (18, 20) are arranged on a shared electronic circuit support element (44) positioned within the stator, the shared support element (44) preferably being in the shape of a disc, disc segment, ring or ring segment.

10. The actuator according to claim 9, **characterized in that** the shared support element (44) comprises a plurality of housings (46, 48, 50), and preferably a number P of housings, each of the housings being suitable for receiving a Hall effect sensor (18, 20).

11. The actuator according to any one of claims 8 to 10, **characterized in that** the Hall effect sensors (18, 20) are binary output Hall effect sensors.

12. The actuator according to any one of claims 8 to 10, **characterized in that** the Hall effect sensors (18, 20) are analog output Hall effect sensors, connected to a post-treatment stage delivering binary signals.

13. The actuator according to any one of claims 8 to 12, **characterized in that** the number A is equal to two or four.
